# EUROPEAN PATENT APPLICATION

(11) **EP 1 437 041 A1**
(43) Date of publication of application: **14.07.2004**
(21) Application number: 02777363.9
(22) Date of filing: 23.09.2002
(51) Int. Cl.: A01K 15/00, A61J 17/00

(54) **ITEM FOR CHEWING**

(30) Priority: 24.09.2001 ES 200102336 U
(71) Applicant: Qualillet S.L., 08504 Saint Julia de Vilatorta (ES)
(72) Inventor: AYMERICH ISERN, Joan, E-08506-Calldetenes (ES); SERRALLONGA GUTIERREZ, Lluis, E-08512 Saint Hipòlit de Voltregà (ES)
(74) Representative: Curell Aguilà, Marcelino
(86) International application number: PCT/ES2002/000446
(87) International publication number: WO 2003/026405

(57) **Abstract**

This item for mastication consists in a, masticatory-like, item which is intended, in one respect, to assuage those distresses of the mouth infants suffer on the appearance of first teeth and to replace dummies during this teething period and, furthermore, to constitute an item for play, training and calming of pet animals, whilst in both cases the subject of the invention can be used as a masticatory or medium for administering medicines, vitamins or other products, which is constituted by a whole intestine and/or by one or more fragments thereof, from livestock and animals for consumption, originally having a flattened tubular form substantially like that of a ribbon which, by means of folding and/or interweaving together of one or more lengths thereof, form a compact three-dimensional body which is suitable for being bitten.

## Description

### Field of the invention

This invention relates to an item for mastication, and in particular to a masticatory-like item intended, in one respect, to assuage those distresses of the mouth infants suffer on the appearance of first teeth and to replace dummies during this teething period and, furthermore to constitute an item for play, training and calming of pet animals, whilst in both cases the subject of the invention can be used as a masticatory or medium for administering medicines, vitamins or other products.

Items for mastication are known, used as devices to attenuate the discomforts of infant teething and constituted by rings of elastomeric material or by bags of limited size containing a cool fluid.

Likewise, as concerns pet animals, items are known which are suitable only to be bitten by said animals, and which are made from rubber or similar whilst other items are also known which are designed to be bitten, gnawed and eaten, such as hardened biscuits, extruded bars of agglomerated hard edible materials and the pet chew which is the subject of European patent n° 97 308 545, etc.

These objects are all however either insipid or easily broken up by the animals, and thus neither attractive to users nor long lasting.

In order to avoid such drawbacks the solution adopted is to produce such items from natural materials having an intrinsic agreeable flavour, which can be enhanced if necessary.

In accordance with the preceding solution the subject of this invention has been developed consisting in an item for mastication, like a chew or a masticatory, which is constituted by a whole intestine and by one or more fragments of the same, from livestock and animals for consumption, which, through the folding and/or interweaving together of one or more lengths of such, form a compact three-dimensional body which is suitable for being bitten and chewed.

A feature of the invention consists in the intestine originally having a flattened tubular form substantially like that of a ribbon, extending longitudinally in irregular lengths of variable transversal curvature, which can be formed by entwining and/or twisting to adopt a rope-like configuration.

Another feature of the invention lies in the fact that the three-dimensional body is constituted by one or more lengths of ribbon-like intestine, which are folded on themselves in equal lengths forming a bundle and then bound together by parts of the same intestine.

Another characteristic of the invention concerns the possibility that the three-dimensional body can consist of intestines arranged in the form of a twisted bunch, a plait, a ball or a compact body.

To facilitate understanding of the previous ideas, the subject of the invention is described below, with reference to the annexed illustrative figures, in which:
Figure 1, is a perspective view of part of an animal intestine having a flattened tubular form like that of a ribbon, in its natural dried, semidried, smoked, cooked, boiled state, etc., and which has not been subjected to any forming process;
Figure 2, is a perspective view of a rope-like multiple bunch of intestines;
Figure 3, is a perspective view of three rope-like intestines interwoven together as in a plait;
Figure 4, is a perspective view of a ball resulting from winding of one or more intestines;
Figure 5, is a perspective view of a three-dimensional body configured as a bundle formed from folded intestines; and
Figure 6, is a perspective view of a cylindrical block, obtained by compression of bits of intestine.

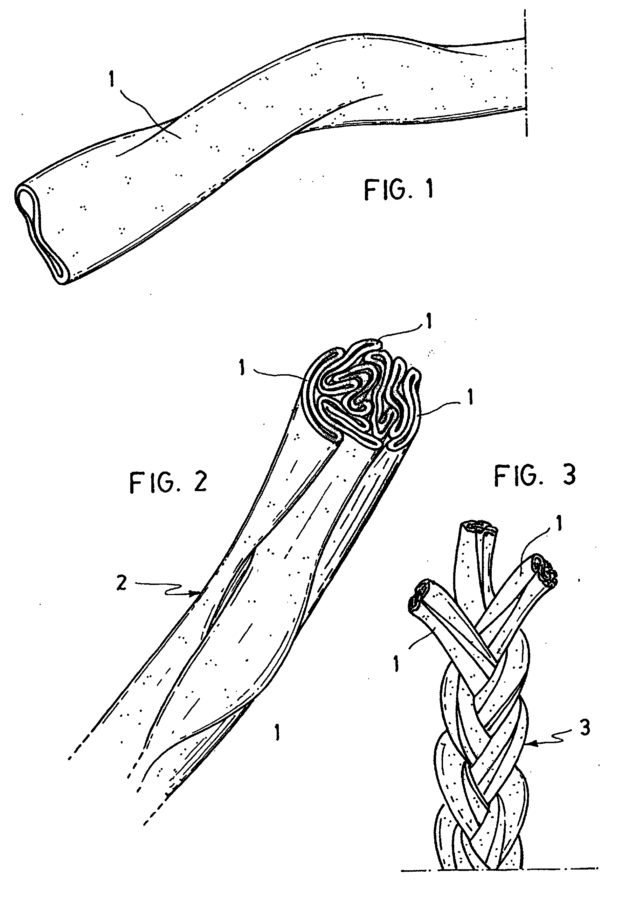

The natural intestine 1, from animals for human consumption, is taken in its dried, semidried, smoked, cooked, boiled state etc. and lacking any specific configuration that is not that of a tubular ribbon, as shown in figure 1.

The item for mastication which is the subject of the invention, familiarly known as a masticatory, is constituted by a whole intestine and/or by one or more fragments of intestine, from livestock and animals for human consumption which, by means of folding and/or interweaving together of one or more parts of intestine, configure a compact three-dimensional body which is suitable for being bitten, serving as a masticatory.

As indicated and shown in figure 1, the natural intestine 1 originally has a flattened tubular form substantially like that of a ribbon, which extends longitudinally in the form of irregular lengths of variable transversal curvature.

A form of presentation of the natural intestine to be used as a chew according to the invention is shown in figure 2, in which several intestines 1 are grouped to form a rope-like body 2 by means of entwining and/or twisting thereof.

Similarly, another form of presentation of the natural intestine is that shown in figure 3, in which three or more rope-like bodies 2 constituted by natural intestines 1 are interwoven to form a plaited body 3.

Obviously, fragments of rope-like body 2 or plaited body 3, duly stabilised, constitute items for mastication according to the invention.

Another form of presentation of the natural intestine 1, for use as masticatory is that shown in figure 5, in which the three-dimensional body which, as masticatory, constitutes the subject of the invention, is formed by one or more lengths of natural intestine 1, which are folded on themselves in equal lengths like a bundle 4 and bound by means of binding parts 5.

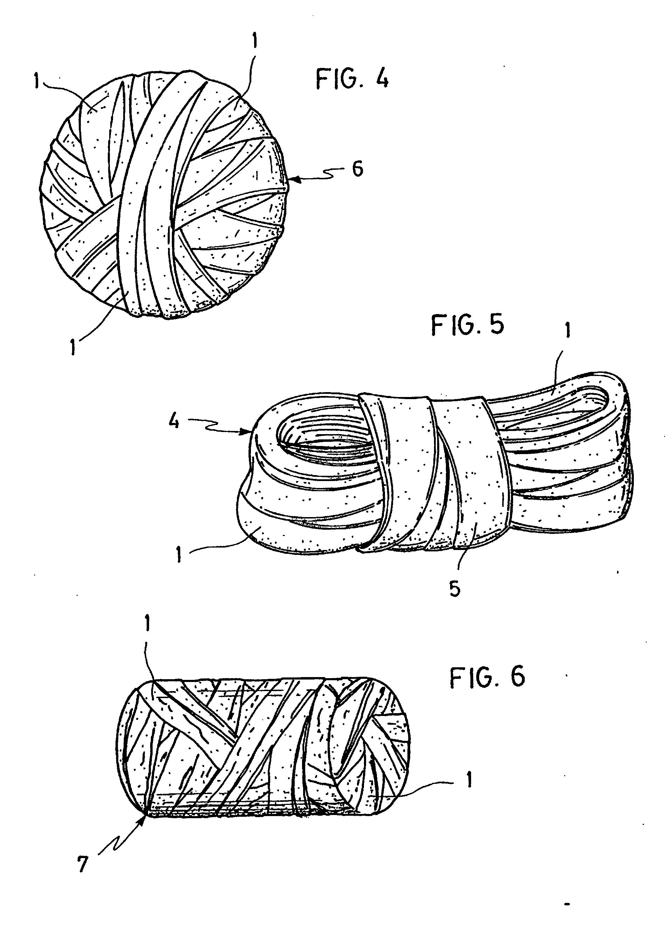

A further form of presentation of the natural intestine 1, for use as masticatory according to the invention, consists in that shown in figure 4, in which the three-dimensional body is constituted by a natural intestine 1 or fragments of such which, joined successively by their ends to provide a sufficient length of intestine so as to allow its treatment, adopts the configuration of a ball 6 obtained by the winding thereof.

Finally, another embodiment of the masticatory according to the invention consists in forming the three-dimensional body by association of a plurality of bits of intestine 1 and compacting the same in a compressed block 7, which can adopt any geometric or zoomorphic configuration, such as a pig ear or other animal part.

## Claims

1. Item for mastication, in particular a masticatory-like item intended, in one respect, to assuage those distresses of the mouth infants suffer on the appearance of first teeth and to replace dummies during this teething period and, furthermore, to constitute an item for play, training and calming of pet animals, whilst in both cases the subject of the invention can be used as a masticatory or medium for administering medicines, vitamins or other products, **characterised in that** it is constituted by a whole natural intestine 1 and/or by one or more fragments thereof, from livestock and animals for consumption, originally having a flattened tubular form substantially like that of a ribbon extending longitudinally in irregular lengths of variable transversal curvature which, by means of folding and/or interweaving together of one or more lengths thereof, form a compact three-dimensional body 3, 4, 6 and 7 which is suitable for being bitten.

2. Item for mastication, according to the prior claim, **characterised in that** in the three-dimensional body the intestine has a rope-like configuration 2 by means of entwining and/or twisting of the same.

3. Item for mastication, according to claim 1, **characterised in that** the three-dimensional body 4 is constituted by one or more lengths of ribbon-like intestine, which are folded onto each other in equal lengths to form a bundle and bound together by parts 5 of the same intestine.

4. Item for mastication, according to claims 1 and 2, **characterised in that** the three-dimensional body 3 is constituted by two or more equal lengths of intestine 1, which are joined together in rope form 2 by twisting and/or plaiting.

5. Item for mastication, according to claims 1 and 2, **characterised in that** the three-dimensional body 6 is constituted by an intestine 1 and/or fragments thereof which, successively joined by their ends to provide a sufficient length of intestine, adopt the configuration of a ball by means of winding thereof.

6. Item for mastication, according to claim 1, **characterised in that** the three-dimensional body 7 is constituted by a plurality of bits of intestine 1, or fragments thereof, which constitute a compressed block.

7. Item for mastication, according to claim 1, **characterised in that** the intestine 1, in all cases of animal origin, is one of the group comprising dried intestine, semidried intestine, smoked intestine, cooked intestine, boiled intestine and open intestine, whether considered separately or in their possible combinations.

8. Item for mastication, according to claim 6, **characterised in that** the compressed block 7 has a cross section of the group comprising polygons, closed curvilinear forms, arcuate forms, stellate forms and different fanciful shapes.

9. Item for mastication, according to claim 6, **characterised in that** it adopts a configuration structure like a pig ear or other anatomical element.
